# EUROPEAN PATENT APPLICATION

(11) **EP 2 139 164 A1**
(43) Date of publication of application: **30.12.2009**
(21) Application number: 09163679.5
(22) Date of filing: 24.06.2009
(51) Int. Cl.: H04L 12/24, H04L 12/26

(54) **Method and system to monitor equipment of an it infrastructure**

(30) Priority: 24.06.2008 US 75308 P
(71) Applicant: FRANCE TELECOM, 75015 Paris (FR)
(72) Inventor: Chioiu, Alfred, SAN JOSE, CA 95129 (US); Krishnasamy, Santhana, FOSTER CITY, CA 94404 (US)

(57) **Abstract**

The invention relates to a method for monitoring and analyzing IT infrastructures in a telecommunication system, the system comprising a controller node and a plurality of IT infrastructures, the method comprising for the controller node the acts of distributing a monitoring agent to each IT infrastructure through the telecommunication system, the IT agent being adapted to monitor performance parameters of the IT infrastructure and forward performance data corresponding to the performance parameters to the controller node, receiving for at least one of the IT infrastructures the performance data, gathering for at least one performance parameter an IT infrastructure filter and a set of rules, the IT infrastructure filter defining a subset of the performance data, and the set of rules defining computational rules to be applied to the subset of data, and calculating statistics for the at least one performance parameter based on the set of rules applied to the subset of data.

## Description

### FIELD OF THE PRESENT INVENTION:

The present invention generally relates to communication networks and more specifically to IT Management performance data collection and processing.

### BACKGROUND OF THE PRESENT INVENTION:

Maintaining a functional Enterprise IT (Information Technology) infrastructure is a key requirement of business today. The IT infrastructure is the very backbone around which companies are built and operate. Enterprises are running their business processes on a complex infrastructure that consists of routers, switches, servers, desktops, laptops and a variety of mobile devices.

New technologies like virtualization and cloud computing have started to move from research labs into the enterprise space. Companies are using a large number of software applications starting with email and office productivity tools and ending with complex enterprise applications like CRM (Customer Relationship Management), ERP (Enterprise resource planning), SFA (Sales Force Automation Systems), and so on. In search for superior efficiencies, companies have created a highly integrated enterprise computing infrastructure that binds together elements such as networks, computing equipment, operating systems, databases, middleware, and software applications in a complex mesh that is more and more difficult to configure, manage and control.

Different IT management models are available today to answer the need for a functional enterprise IT.

One of the first standards in IT management was developed by ITU-T (International Telecommunication Union - Telecommunication Standardization Sector). In May 1996 ITU-T created recommendation M.3010 which introduced the concept of TMN (Telecommunications Management Networks). M.3010 was developed as a framework for service providers to manage their service delivery network. It consists of four management architectures at different levels: functional, physical, informational and logical layers.

In April 1997 ITU-T produced a new recommendation known as M.3400. M.3400 introduced the FCAPS (Fault Management, Configuration Management, Accounting/Asset Management, Performance Management and Security Management). Although the ITU-T initially developed the concept of FCAPS, it was the ISO (International Organization for Standardization) which applied it to data networks. ISO delivered the FCAPS framework called Open System Interconnect Network Management Model. FCAPS acronym lists the management categories for which the ISO model defines network management tasks.

Subsequently, the Internet Engineering Task Force (IETF) created SNMP (Simple Network Management Protocol) in order to provide a means of managing IP devices. SNMP is used to monitor network-attached devices for conditions that warrant administrative attention. It consists of a set of standards for network management, including an Application Layer protocol, a database schema and a set of data objects. All major equipment vendors (e.g. CISCO) provide today support for SNMP in their equipment and also some proprietary extensions and/or management protocols.

Most of the known IT management products such as IBM Tivoli™, HP Openview™, BMC Patrol™ or CA Unicenter™, offer heavy weight solutions that require high costs for initial deployments and also qualified personnel to configure and operate them. The market targeted by these companies consists of large companies, which have the financial and human resources to invest in these proprietary solutions.

Smaller and Medium sized companies (SMEs), which cannot afford to pay for deploying and monitoring such heavy weight IT Management solutions, are either relying exclusively on the experience of their IT workers to configure and manage their networks and/or are using one of the existing free open-source packages available at the moment (Opennms, Nagios, Zenoss, etc...).

More and more innovative companies are offering on-demand IT Management services. For instance, Paglo and Netcraft propose solutions to collect and monitor the IT performances for SMEs. In e-Business Engineering, 2007 - ICEBE 2007 - IEEE International Conference, Published on Oct 24-26th 2007; pages 173 - 180, ISBN: 978-0-7695-3003-1; Digital Object Identifier: 10.1109/ICEBE.2007.70, a tool for a capturing knowledge from IT infrastructures is described. This tool further allows mining, storage and sharing of the collected information in a Knowledge Management Database. The described tool collects configuration and operational information from multiple infrastructures and applies commonly used data processing functions such as change tracking and probability statistics on this raw information. Through the processing of the information, statistics and predictions can be computed. Nevertheless the resulting knowledge is not shared beyond the group of IT infrastructures involved in the capturing of information.

To share return on experience on different IT infrastructures, a number of companies relies today on communities of IT workers, such as forums and blogs (for instance Splunk or Paglo) to create and expand their online knowledge base. There, users can share IT management issues and learn from others.

If lots of feedback is available today on IT infrastructure performances, it is not easily sharable, and companies such as SMEs cannot easily compare their own IT infrastructures to what can be seen as the standards in their field or industry. Furthermore, the blogs and forums may be seen as interest groups. If valuable information can be, it will still require a lot of contacts to establish a standard IT performance in one's field and evaluate one's own performance.

There is still a need today for an improved method to share IT infrastructure performances among companies. There is a further need for a tool to calculate standard performances in one's field.

### SUMMARY OF THE PRESENT METHOD AND SYSTEM:

It is an objective of the present method and system to overcome disadvantages and/or make improvements in the prior art.

To that extend, the present method relates to a method for monitoring and analyzing IT infrastructures in a telecommunication system, the system comprising a controller node and a plurality of IT infrastructures, the method comprising for the controller node the acts of:
distributing a monitoring agent to each IT infrastructure through the telecommunication system, the IT agent being adapted to monitor performance parameters of the IT infrastructure and forward performance data corresponding to the performance parameters to the controller node,
receiving for at least one of the IT infrastructures the performance data,
gathering for at least one performance parameter an IT infrastructure filter and a set of rules, the IT infrastructure filter defining a subset of the performance data, and the set of rules defining computational rules to be applied to the subset of data,
calculating statistics for the at least one performance parameter based on the set of rules applied to the subset of data.

Thanks to the monitoring agent, and the resulting IT performances monitoring, statistics can be derived at the controller node. The filter may define a subset of IT infrastructures which correspond to e.g. a given type of industry, like manufacturing, insurance, banking, or the like. One or more performance parameters may be analyzed for the subset of IT infrastructures.

The set of rules defines the computational operations to be performed on the selected performances parameters through the IT infrastructure filter.

Thanks to the present method, any company may request to the controller node an automated benchmarking of its IT infrastructure when compared to the "standards" of its industry.

The present application also relates to a telecommunication system for monitoring and analyzing IT infrastructures, the system comprising a controller node and a plurality of IT infrastructures, the controller node being adapted to:
distribute a monitoring agent to each IT infrastructure through the telecommunication system, the IT agent being adapted to monitor performance parameters of the IT infrastructure and forward performance data corresponding to the performance parameters to the controller node,
receiving for at least one of the IT infrastructures the performance data,
gather for at least one performance parameter an IT infrastructure filter and a set of rules, the IT infrastructure filter defining a subset of the performance data, and the set of rules defining computational rules to be applied to the subset of data,
calculate statistics for the at least one performance parameter based on the set of rules applied to the subset of data.

The present application also relates to a controller node for monitoring and analyzing IT infrastructures in a telecommunication system comprising the plurality of IT infrastructures, the controller node being arranged to:
distribute a monitoring agent to each IT infrastructure through the telecommunication system, the IT agent being adapted to monitor performance parameters of the IT infrastructure and forward performance data corresponding to the performance parameters to the controller node,
receive for at least one of the IT infrastructures the performance data,
gather for at least one performance parameter an IT infrastructure filter and a set of rules, the IT infrastructure filter defining a subset of the performance data, and the set of rules defining computational rules to be applied to the subset of data,
calculate statistics for the at least one performance parameter based on the set of rules applied to the subset of data.

The present application also relates to an IT infrastructure in a telecommunication system comprising the IT infrastructure and at least one other IT infrastructure and a controller node for monitoring and analyzing the IT infrastructures, the IT infrastructure being arranged to:
receive a monitoring agent from the controller node through the telecommunication system, the IT agent being adapted to monitor performance parameters of the IT infrastructure and forward performance data corresponding to the performance parameters to the controller node,
send a request to the controller node, the request comprising for at least one performance parameter an IT infrastructure filter and a set of rules, the IT infrastructure filter defining a subset of the performance data received by the controller node from the plurality of IT infrastructures, and the set of rules defining computational rules to be applied to the subset of data,
receiving from the controller node statistics for the at least one performance parameter based on the set of rules applied to the subset of data.

### BRIEF DESCRIPTION OF THE DRAWINGS:

The present system and method are explained in further detail, and by way of example, with reference to the accompanying drawings wherein:
FIG. 1 shows an exemplary embodiment of the present system;
FIG. 2 shows an exemplary embodiment of the present method in accordance with the exemplary embodiment of FIG. 1; and
FIG. 3 shows a controller node in accordance with an embodiment of the present system.

### DETAILED DESCRIPTION OF THE PREFERRED EMBODIMENTS:

The following are descriptions of exemplary embodiments that when taken in conjunction with the drawings will demonstrate the above noted features and advantages, and introduce further ones.

In the following description, for purposes of explanation rather than limitation, specific details are set forth such as network architecture, infrastructures, interfaces, techniques, etc., for illustration. However, it will be apparent to those of ordinary skill in the art that other embodiments that depart from these details would still be understood to be within the scope of the appended claims.

For example, the invention allows the collecting and analyzing performance parameters of different IT infrastructures, parameters such as the FCAPS from the M.3400 mentioned before. This is achieved through a monitoring agent which is distributed by a controller node to a plurality of IT infrastructures, the controller node collecting and aggregating the data by all the distributing monitoring agents. The controller node may be part of one of the monitoring IT infrastructures, or attached to a distinct IT infrastructure dedicated to the monitoring. The controller node may be a server or a proxy in this IT infrastructure. The man skilled in the art will notice that this is not the sole embodiment possible. The controller node may comprises two parts, a distribution part in charge of distributing the monitoring agent to any subscribed IT infrastructure, and a processing part in charge of analyzing the performance based on the received performance data.

Moreover, for the purpose of clarity, detailed descriptions of well-known devices, systems, and methods are omitted so as not to obscure the description of the present system. In addition, it should be expressly understood that the drawings are included for illustrative purposes and do not represent the scope of the present system.

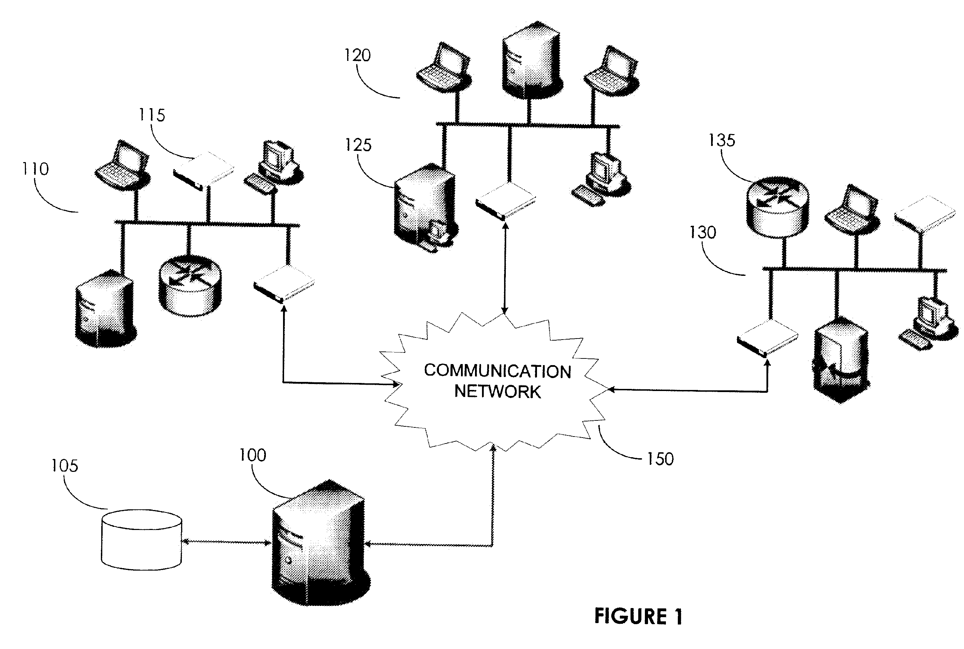

FIG. 1 shows an illustration of an embodiment of the present system. A plurality of IT infrastructures 110, 120 and 130 are illustrated. Only three IT infrastructures are shown for simplification purposes, but any number of infrastructures may be monitored thanks to the present system. The IT infrastructures, or the company they are hosted by, may be seen as the end users in the present system.

An IT infrastructure may be seen as the network of computers, servers, nodes, routers, and communication links used in a company or part of a company.

As illustrated in FIG. 1, each IT infrastructure may comprise a number of computers, servers, nodes, ... distributed over one or several Local Area Networks (LAN). Such a LAN may be a wireless network, a wireline network, or a combination of both. Different network technologies may be used such as e.g. WIFI, WIMAX, GPS, GSM, ... The type of LAN is beyond the scope of the present application. The IT infrastructure may be administered by an IT administrator, or any IT personnel, who is interested in monitoring the performances of the IT infrastructure of his/her company. As illustrated in the different use cases later on, this interest may included benchmarking the IT infrastructure performances against the standard of the industry, or understanding why an element in the infrastructure is showing some level of dysfunction. The interest may be defined through metrics for quantifying business efficiency, which involves, as seen later on, data mining and analysis.

The present system comprises a controller node 100 adapted to carry out the present method. When using the present system, the end user 110, 120 and 130, or its IT personnel, creates a company account on the controller node 100. This end user may further provide to node 100 information to describe its company profile. The company profile may comprise (but is not limited to) characteristic such as:
- number of employees,
- type of industry, also referred to vertical industry,
- type of network,
- type of Operating System (OS),
- type of material, such as storage capacity, CPU, number of servers, PCs, mobiles, ...
- type of IT technology, ...

The controller node 100 may be accessible to an end user through a communication network 150 as illustrated in FIG. 1. This communication network may be e.g. the internet, or a dedicated private network. The different end users may actually communicate with controller node 100 using different communication technologies, and the illustration of a communication network 150 ought to be seen in its widest context so as to not limit the nature of the exchange between an end user 110, 120 or 130 and controller node 100.

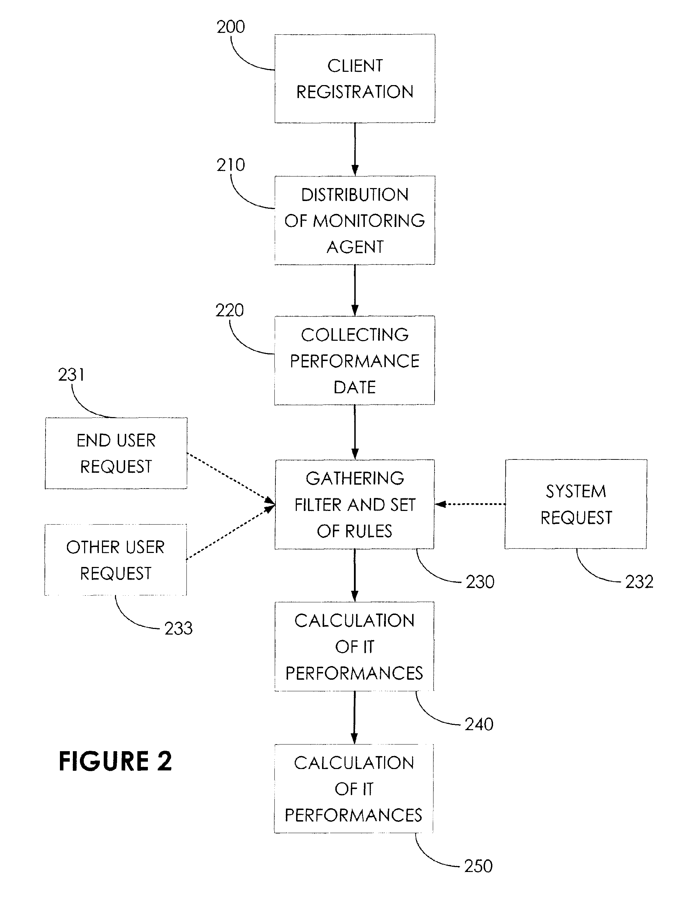

FIG. 2 shows an exemplary embodiment of the method according to the present invention. In a preliminary act 200, a end user registers with the controller node 100 of FIG. 1. As mentioned before, the registration may be carried out over a dedicated network or through the internet. When registering to controller node 100, the end user may provide a company profile, such a company profile will help in the further data mining and analysis carried out by the controller node.

In a further act 210, a monitoring agent is transferred from the controller node 100 to the end user IT infrastructure. The monitoring agent, which can be seen as a collector software, is then installed on one of the end user machines. For instance, as illustrated in FIG. 1, the collector agent may be installed on server 115 for IT infrastructure 110, node 125 for IT infrastructure 120, and router 135 for IT infrastructure 130. The monitoring agent may also be duplicated and distributed over several machines of the end user IT infrastructure if required.

Act 210 will further comprise the discovery of all machines (Windows, Linux, etc..) inside the end user's LAN. The end user may chose to limit the discovery to some part of its LAN and machines, in an optional act.

The collector may then start monitoring and collecting performance date of the end user IT infrastructure. The monitoring may include the detection of alarm conditions, such a system failure, machine failure, system overload, ... The monitoring may further comprise Configuration Management, Accounting/Asset Management, Security Management as defined in the FCAPS model mentioned before.

The collector agent will also start collecting performance data (data mining) for the different discovered machines as well as the whole end user IT infrastructure. The performance data may include (but not limited to) performance parameters such as:
- CPU occupancy
- network interface status
- Quality of Service parameters
- equipment temperature readings
- Various Application servers' availability - Data base responsiveness history data
- Disk space utilization history
- Memory utilization history

The collector agent may also discover the services running on the IT infrastructure machines (HTTP server, SMTP servers, etc...) to provide collect further performance data.

The collecting of performance parameters may be periodic, triggered by the administrator or once a variation extends beyond a given threshold for instance. The collecting may vary from one parameter to the other, and may either be defined by the end user or set by the present system.

In a further act 220, the controller node 100 receives from the collector agent distributed to each end user the collected performance data. The transfer of data from one end user to the controller node may be periodic, set by the end user, or depending on the load of data collected. It may also vary from one end user to the other, depending of their IT infrastructure, the number of machines, ... The transfer of data is achieved over the communication network 150 as illustrated in FIG. 1.

The transferred data may be stored in a database 105 operatively connected to controller node 100, with a dedication portion per end user. The data may be stored using know database storing technologies, e.g. over time and per performance parameter. In the present system, the data may be logically segregated so as to separate the set of data from different end users ... Other storing technologies are readily available to the man skilled in the art. The database may be secured to as to limit the access as the anonymity of the data may be of importance to the end users. This privacy issue is beyond the scope of the present invention. One may allow for instance an end user to access its collected data based on an on demand service. Database 105 may also store subscription configuration data for end users.

Acts 200 to 220 allow the collecting of performance parameters over time from the different end users. The here after acts allow the data mining (on the end users side) and analysis (on the controller node) of the collected information.

In a further act 230, the controller node 100 gathers for at least one given performance parameter an IT infrastructure filter and a set of rules. Considering how valuable the collected information is, many different analyses may be run over these data to collect statistics per manufacturers, per industry, ... for instance. The IT infrastructure filter and the set of rules help refine these analyses.

Three analysis components may be defined to run a present analysis:
- at least one performance parameter. This may be as listed before the message overhead, the average CPU of machines, the number of users, ... One or more performance parameter may be selected, depending on the goal of the analysis. The selection of one or more performance parameters defines a first subset of the performance data received and stored by the controller node 100,
- an IT infrastructure filter to define among the monitored end users which IT infrastructures are retained for the present analysis. This filter may also be used to select the type of machines, as well as the nature of their use, that are to be analyzed. For instance if someone is interested in monitoring all Dell® machines or a specific Dell® server that is used as an email server, http server, ... the IT infrastructure filter will help select among the performance data the ones that correspond to this type of manufacture or machine and/or usage. The filter may also be criterion such as size of the company, revenue, ... The IT infrastructure filter defines a second and smaller subset of performance data from the first subset of data. The IT infrastructure filter may also be seen as selection criteria to define the second subset of performance data. For instance, the IT infrastructure filter may define selection criteria based on the type of industry owing the IT infrastructure, or the type of material used in the IT infrastructure,
- a set of rules, to define the computational operations to be performed on the selected performance parameters using their value from the second subset of data (resulting from the IT infrastructure filter and the choice of performance parameters). These operations may be for instance average, extreme values, variations in value beyond a given threshold, ...

These analysis components may be either defined in a request:
- from an end user (act 231),
- from the present system itself, e.g. from the controller node itself or an IT administrator operating the present system (act 232),
- from other users to the present system, such as for instance machines manufacturers (act 233).

Thanks to the present system, and the use of specific data mining, data analysis techniques and algorithms, it is possible to perform vertical industry benchmarking, identify trends, provide contextual recommendations, etc... Furthermore, the present method may be implemented as one single application (also called here after tool or service) accessible to the end users, this application knowing how to segregate the transferred data, and handle the analyses. The end user is provided with a service which:
- allows its IT infrastructure to be monitored (through the monitoring agent),
- gives access to its collected performance data,
- allows the sending of end user request (see act 231 of FIG. 2) to benchmark its performance against the rest of the industry, or against similar IT infrastructures (using similar or identical machines), ...

End users are provided with a (on demand) tool to easily access performances analyses and statistics, against other end users. Depending on the expectations of the end users in terms of analyses, the monitoring agent may be updated to monitor and transfer additional performance parameters, so that the type and nature of the subsequent analyses may be expanded.

The here after user cases will illustrate the different analyses that may be performed thanks to the present system and method.

### Use case 1: Vertical Industry Benchmarking

Thanks to the present system, an end user A may need to benchmark over time its specific performance data (e.g. CPU occupancy of the DELL® server that runs the email server of a financial institution with 25 advisors) against vertical industry average. End user A sends the controller node a request comprising:
- a performance parameter: CPU occupancy,
- an IT infrastructure filter: financial institutions employing in between 15 to 30 employees, and a DELL® server used as an email server,
- a set of rules: average value of the performance parameter.

As all the selected end users are using comparable DELL email servers, this request will help the controller node to give an indication about how well end user A server performs compared with the industry average.

### Use case 2: Contextual recommendations

An IT Administrator is notified when one of his computers experiences a failure condition (network interface down). This may be achieved thanks to the monitoring agent which may also be adapted to monitor alert on the IT infrastructure. This may also be based on other monitoring applications available to the IT administrator. Such applications may also present a list of possible root causes responsible for the failure. Based on this list, the administrator sends to the controller node a request using:
- the performance parameters identified from the list of possible root causes,
- an IT infrastructure filter using the type of material identified in the list of possible root causes,
- a set of rules comprising average, maximum and minimum values for the selected performance parameters,

The data analysis from the controller node reveals a common problem with the type of network card employed in a similar computer used in other IT infrastructure. In accordance with an additional embodiment of the present system, the IT administrator may be provided along with the analysis, a link to the network card vendor's website that lists instructions on how to obtain a free replacement card.

The request in this use case may either be sent by the IT administrator, or a automated request may be derived from the list of possible causes so as to render the present tool completely automated.

In another additional embodiment of the present invention, vendors providing IT infrastructure material to end users may also provided performance data to the collector node, so as to enrich the database with vendors' side information. This could improve the detection of possible causes of failures for instance with the information coming directly from the vendor itself.

### Use case 3: Trend Identifier

Based on data analysis, the controller node may identify an "increased possibility of defect" trend related to a certain type of a manufacturer A routers.

On a periodic basis, the controller node may formulate its own request by gathering:
- a list of parameters that qualifies the type of routers performances,
- a IT infrastructure filter to define a subset of data corresponding to this type of routers, i.e. a specific type of material,
- a set of rules comprising maximum, average and minimum values for the selected performance parameters.

Based on the results, and if the trend is confirmed from the periodic analysis, the controller node then will notify the vendor by email. Email may include the data that supports the finding.

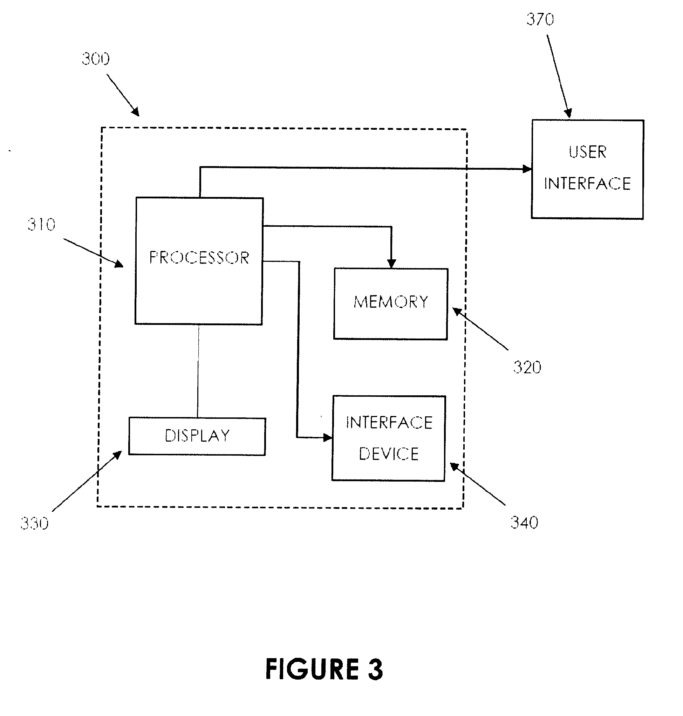

FIG. 3 shows a controller node 300 in accordance with an embodiment of the present system. The controller has a processor 310 operationally coupled to a memory 320, a display 330, a user input device 370 and one or more interface devices 340. The memory 320 may be any type of device for storing programming application data, such as to support data analysis, as well as other data, such as performance data, end user subscription data, or else. The programming application data and other data are received by the processor 310 for configuring the processor 310 to perform operation acts in accordance with the present method. The operation acts may include controlling the display 330 to display analysis results, or a request received from an end user to an administrator managing the controller node 300. The user input 370 may include a keyboard, mouse, trackball, or other device, such as a touch sensitive display, or the likes. The user input device 370 is operable for interacting with the processor 310 including interaction within memory 320 and the database of performance data as well as subscription data of end users, and/or other elements of the present system.

Regarding memory 320, any medium known or developed that may store and/or transmit information suitable for use with a computer system may be used as the memory 320. Additional memories may also be used. The memory 320, and/or any other memories may be long-term, short-term, or a combination of long-term and short-term memories. These memories may configure the processor 310 to render and implement the present method, operational acts, and functions disclosed herein. The memories may be distributed or local and the processor 310, where additional processors may be provided, may also be distributed or may be singular as mentioned before.

For instance, memory 320 may be one single memory storing the application program to perform the acts of the present method and the database of performance parameters and end user subscriptions. In an alternative embodiment of the present system, the database for storing collected performance parameters may be a distinct database operatively coupled to processor 310, as illustrated in the exemplary embodiment of FIG. 1 with database 105. The same is valid for the subscription data. Moreover, the term "memory" should be construed broadly enough to encompass any information able to be read from or written to an address in the addressable space accessible by a processor. With this definition, information on a network is still within memory 320, for instance, because the processor 310 may retrieve the information from the network for operation in accordance with the present system.

Furthermore, processor 310 may for instance comprise several parts, such as a distribution part in charge of distributing the monitoring agent to any subscribed end users, and a processing part in charge of analyzing the performance based on the received performance data and the request. The distribution and processing parts may themselves be further divided in subparts.

Clearly the processor 310, memory 320, display 330, user input device 370, and/or interface device 340 may all or partly be a portion of a computer system or other device, such as a server. Furthermore, the present method is particularly suited to be carried out by a computer software program, such program containing modules corresponding to one or more of the individual steps or acts described and/or envisioned by the present system. Such program may of course be embodied in a computer-readable medium, such as an integrated chip, a peripheral device or memory, such as the memory 320 and/or other memory coupled to the processor 310.

The processor 310 is capable of providing control signals and/or performing operations in response to input signals from either the user input device 370 or a request received either received from an end user or own controller node request. Processor 310 then executes instructions stored in the memory 320 using the input signals. The processor 310 may be an application-specific and/or general-use integrated circuit(s). Further, the processor 310 may be a dedicated processor for performing in accordance with the present system and/or may be a general-purpose processor wherein only one of many functions operates for performing in accordance with the present system. The processor 310 may operate utilizing a program portion, multiple program segments, and/or may be a hardware device utilizing a dedicated or multi-purpose integrated circuit. Further, in a distributed system, portions of an operation may be performed on one processor with data generated therefrom being transferred to one or more further processors.

Obviously, readily discernible modifications and variations of the present system are possible in light of the above teachings. It is therefore to be understood that within the scope of the appended claims, the present invention may be practiced otherwise than as specifically described herein. For example, while described in terms of hardware/software components interactively cooperating, it is contemplated that the invention described herein may be practiced entirely in software. The software may be embodied in a carrier such as magnetic or optical disks, or a radio frequency or audio frequency carrier wave.

Thus, the foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the present invention, as well as other claims. The disclosure, including any readily discernible variants of the teachings herein, define, in part, the scope of the foregoing claim terminology such that no inventive subject matter is dedicated to the public.

For example, a request for analysis may be generated by the controller node itself on a periodic basis, or once it detects some significant variations for one or more given performance parameters for one or more end user IT infrastructures. A request may also be generated by an IT administrator supervising the controller node. The tool available thanks to the present method may also be available to vendors and manufacturers to monitor their equipment in end users' IT infrastructures to anticipate problems that may be generic.

The section headings included herein are intended to facilitate a review but are not intended to limit the scope of the present system. Accordingly, the specification and drawings are to be regarded in an illustrative manner and are not intended to limit the scope of the appended claims.

In interpreting the appended claims, it should be understood that:
a) the word "comprising" or "including" do not exclude the presence of other elements or acts than those listed in a given claim;
b) the word "a" or "an" preceding an element does not exclude the presence of a plurality of such elements;
c) any reference signs in the claims do not limit their scope;
d) several "means" may be represented by the same item or hardware or software implemented structure or function;
e) any of the disclosed elements may be comprised of hardware portions (e.g., including discrete and integrated electronic circuitry), software portions (e.g., computer programming), and any combination thereof;
f) hardware portions may be comprised of one or both of analog and digital portions;
g) any of the disclosed devices or portions thereof may be combined together or separated into further portions unless specifically stated otherwise;
h) no specific sequence of acts or steps is intended to be required unless specifically indicated; and
i) the term "plurality of" an element includes two or more of the claimed element, and does not imply any particular range of number of elements; that is, a plurality of elements can be as few as two elements, and can include an immeasurable number of elements.

## Claims

1. A method for monitoring and analyzing IT infrastructures in a telecommunication system, the system comprising a controller node (100) and a plurality of IT infrastructures (110, 120, 130), the method comprising for the controller node the acts of:
distributing a monitoring agent to each IT infrastructure through the telecommunication system, the monitoring agent being adapted to monitor performance parameters of the IT infrastructure and forward performance data corresponding to the performance parameters to the controller node,
receiving for at least one of the IT infrastructures the performance data,
gathering for at least one performance parameter an IT infrastructure filter and a set of rules, the IT infrastructure filter defining a subset of the performance data, and the set of rules defining computational rules to be applied to the subset of data,
calculating statistics for the at least one performance parameter based on the set of rules applied to the subset of data.

2. The method as in claim 1, wherein the IT infrastructure filter defines selection criteria based on at least one of:
a type of industry owing the IT infrastructure,
a type of material used in the IT infrastructure.

3. The method as in claim 1, wherein the act of gathering an IT infrastructure filter and a set of rules further comprises the act of receiving a request comprising the IT infrastructure filter and the set of rules.

4. A telecommunication system for monitoring and analyzing IT infrastructures, the system comprising a controller node (100) and a plurality of IT infrastructures (110, 120, 130), the controller node being adapted to:
distribute a monitoring agent to each IT infrastructure through the telecommunication system, the monitoring agent being adapted to monitor performance parameters of the IT infrastructure and forward performance data corresponding to the performance parameters to the controller node,
receiving for at least one of the IT infrastructures the performance data,
gather for at least one performance parameter an IT infrastructure filter and a set of rules, the IT infrastructure filter defining a subset of the performance data, and the set of rules defining computational rules to be applied to the subset of data,
calculate statistics for the at least one performance parameter based on the set of rules applied to the subset of data.

5. The system as in claim 4, wherein the IT infrastructure filter defines selection criteria based on at least one of:
a type of industry owing the IT infrastructure,
a type of material used in the IT infrastructure.

6. The system as in claim 4, wherein the controller node is further arranged to receive a request comprising the IT infrastructure filter and the set of rules.

7. A controller node (100) for monitoring and analyzing a plurality of IT infrastructures (110, 120, 130) of a telecommunication system, the controller node being arranged to:
distribute a monitoring agent to each IT infrastructure through the telecommunication system, the monitoring agent being adapted to monitor performance parameters of the IT infrastructure and forward performance data corresponding to the performance parameters to the controller node,
receive for at least one of the IT infrastructures the performance data,
gather for at least one performance parameter an IT infrastructure filter and a set of rules, the IT infrastructure filter defining a subset of the performance data, and the set of rules defining computational rules to be applied to the subset of data,
calculate statistics for the at least one performance parameter based on the set of rules applied to the subset of data.

8. The controller node as in claim 7, wherein the IT infrastructure filter defines selection criteria based on at least one of:
a type of industry owing the IT infrastructure,
a type of material used in the IT infrastructure.

9. The controller node as in claim 7, further arranged to receive a request comprising the IT infrastructure filter and the set of rules.

10. An IT infrastructure (110, 120, 130) in a telecommunication system comprising a plurality of IT infrastructures and a controller node (100) for monitoring and analyzing said IT infrastructures, arranged to:
receive a monitoring agent from the controller node through the telecommunication system, the monitoring agent being adapted to monitor performance parameters of the IT infrastructure and forward performance data corresponding to the performance parameters to the controller node,
send a request to the controller node, the request comprising for at least one performance parameter an IT infrastructure filter and a set of rules, the IT infrastructure filter defining a subset of the performance data received by the controller node from the plurality of IT infrastructures, and the set of rules defining computational rules to be applied to the subset of data,
receiving from the controller node statistics for the at least one performance parameter based on the set of rules applied to the subset of data.

11. The IT infrastructure as in claim 10, wherein the IT infrastructure filter defines selection criteria based on at least one of:
a type of industry owing the IT infrastructure,
a type of material used in the IT infrastructure.

12. An application embodied on a computer readable medium and arranged to monitor and analyze IT infrastructures (110, 120, 130) in a telecommunication system, the application comprising:
a portion configured to distribute a monitoring agent to each IT infrastructure through the telecommunication system, the monitoring agent being adapted to monitor performance parameters of the IT infrastructure and forward performance data corresponding to the performance parameters to a controller node,
a portion configured to receive for at least one of the IT infrastructures the performance data,
a portion configured to gather for at least one performance parameter an IT infrastructure filter and a set of rules, the IT infrastructure filter defining a subset of the performance data, and the set of rules defining computational rules to be applied to the subset of data,
a portion to calculate statistics for the at least one performance parameter based on the set of rules applied to the subset of data.

13. The application as in claim 12, wherein the IT infrastructure filter defines selection criteria based on at least one of:
a type of industry owing the IT infrastructure,
a type of material used in the IT infrastructure.

14. The application as in claim 13, further comprising a portion to receive a request comprising the IT infrastructure filter and the set of rules.
